# EUROPEAN PATENT APPLICATION

(11) **EP 1 471 706 A1**
(43) Date of publication of application: **27.10.2004**
(21) Application number: 02711233.3
(22) Date of filing: 30.01.2002
(51) Int. Cl.: H04L 29/06, H04J 13/04

(54) **TRANSMISSION METHOD OF COMMUNICATION APPARATUS**

(71) Applicant: MITSUBISHI DENKI KABUSHIKI KAISHA, Tokyo 100-8310 (JP)
(72) Inventor: KARASUDANI, Keiko, Mitsubishi Denki K. K., Tokyo 100-8310 (JP)
(74) Representative: Popp, Eugen, Dr.
(86) International application number: PCT/JP2002/000684
(87) International publication number: WO 2003/065684

(57) **Abstract**

A transmission method for a communication device that transmits signals including combined plural categories of data, and transmission format combination indicators representing data traffic of the data in each category and category combination is provided with the steps of: predicting data traffic of predetermined categories of data; selecting, among the transmission format combination indicator sets, transmission formats based on the predicted data traffic; searching, among the selected transmission format combination indicators, for transmission format combination indicators that match with transmission data; and transmitting them. Consequently, the time for searching for the transmission format combination indicators can be shortened, and by transmitting data and its transmission format combination indicators without fail, transmission quality can be improved.

## Description

### TECHNICAL FIELD

The present invention relates to transmission methods in communication devices in CDMA communication systems, and particularly relates to decision algorithms for transport format indicators that are attached to transmission data and transmitted.

### BACKGROUND ART

W-CDMA-based radio communication systems enable communication in which data for various services, such as continuous data including voice and moving images, and packet data, are multiplexed and transported. When such communication is carried out, information on plural formats that defines data categories and their rates (the data flow volume per unit time) is reciprocated between a base station and a mobile communication terminal; according to a candidate set of transport format combinations (Transport Format Combination Set, TFCS) that is determined by the above reciprocation, and its indicator (Transport Format Combination Indicator, TFCI), the transport data transmission/reception is performed. Accordingly, the mobile communication terminal has "a transport format search function" that detects the combinations, and for the various service data the transmission-data volume (traffic), needed per unit transmission time when transmitting the data, and that chooses a suitable transport format combination (TFC) from the transport format combination set (TFCS), including plural combinations of the transport data and the transport rates reported from the base station. Then, the chosen transport format combination indicator (TFCI) is transmitted together with the transmission data.

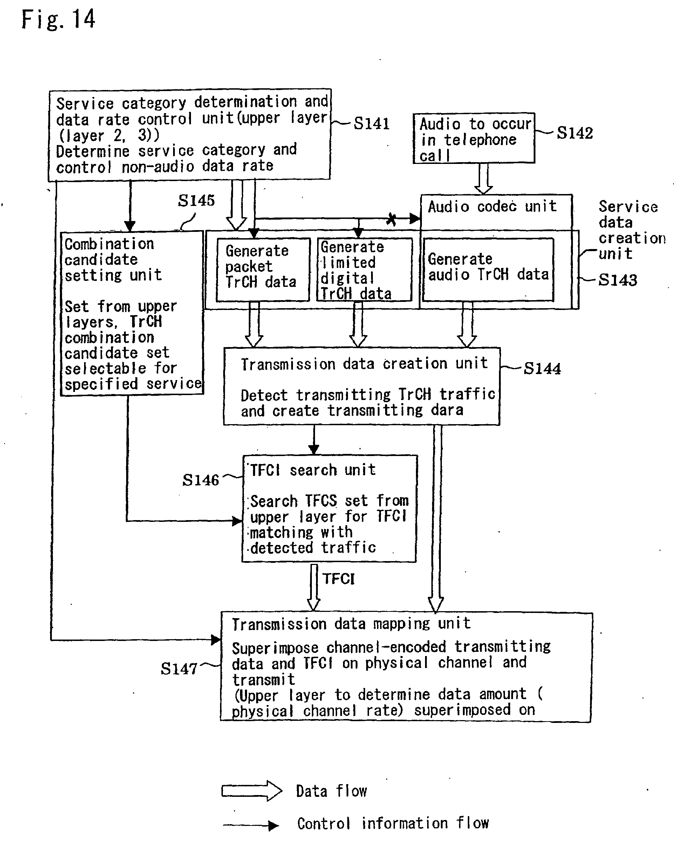

In a conventional mobile communication terminal, the above "transport format search function" has been realized by process flows in Fig. 14. Fig. 14 is a flowchart illustrating a conventional transmission operation, which is represented by operations in each function block, and data flows and control information flows among the function blocks.

In this figure, step S141 denotes operations in a service-category determining unit and a data rate control unit, in which, by communicating control information with the base station and by controlling sequence, the determination of the transmission data service category and data rate control in connection with data whose service category is non-audio, are performed. Specifically, since the operation is performed in a layer 2 and/or a layer 3, that is, upper level layers, the audio data rate cannot be detected. Moreover, step S143 denotes operations in a service data creation unit, in which, in accordance with the service category and data rate that are determined in step S141, transmission transport channel (TrCH) data is created for each service. Regarding audio, based on audio generation in a telephone call (step S 142), the TrCH data is created.

The TrCH data created in step S 143 is inputted into a transmission data creation unit, and in step S144 the transmission data is created with these TrCH data items being multiplexed, and the transmission data traffic (Traffic) is detected.

On the other hand, in a channel-combination setting unit, in response to control information from a service category determination unit and the data rate control unit, for each service in a designated service combination the TrCH size (transport format) combination sets (TFCS) that can be taken (step S145) are set.

In a TFCI search unit, the TFCI that is applicable to the Traffic detected in step S144 is searched in the entire TFCS set in step S145 (step S 146).

Then, in step S147, a transport data mapping unit performs channel encoding of the transmission data that is created in step 144, maps it in a physical channel together with the TFCI determined in step S146, and transmits the results.

Because the search of the transport format is conventionally carried out by the above-described operation, there have been the following problems. That is, in a case in which a number of the service data items are combined and transmitted as described above, the number of TFCI sets (TFCS) that are set for combinations in one service item substantially increases depending on the combinations. Therefore, searching for the TFCI that matches with the transmission data in step S146, takes a long time, causing a problem in that it becomes impossible to transmit the data in time for the transmitting instance.

Moreover, when the audio service is transmitted in combination with other data, i.e., when the audio service is simultaneously transmitted together with non-audio data such as packet data and restricted digital data, the audio data is generated by conversation and the data traffic changes in real time; therefore, it is impossible to detect the data traffic in upper layers. Consequently, the upper layers cannot control the data rate. Therefore, depending on the data traffic of the audio data, the total TrCH data traffic detected in step S144 is likely to exceed the physical channel rate that can be set in the upper layer, and the TFCI cannot be found in step S146 (is not set on the upper layer); consequently, the problem has been that transmission turns out to be impossible.

### DISCLOSURE OF INVENTION

In an aspect of this invention, a transmission method for a communication device that transmits signals including combined plural categories of data, and transmission format combination indicators representing data traffic of the data in each category and category combination comprises: a prediction step of predicting data traffic of predetermined categories of data; a selection step of, among a candidate set of the transmission format combination indicators, selecting transmission format combination indicators, based on the predicted data traffic in the prediction step; a detection step of detecting data traffic of the signals including the combined plural categories of the data; a search step of searching, among the transmission format combination indicators selected in the selection step, for a transmission format combination indicator matching with the data traffic detected in the detection step; and a transmission step of transmitting the transmission format combination indicator searched for and determined in the search step, together with the signals. Consequently, the time for searching for the transmission format combination indicators can be shortened, and by transmitting data and its transmission format combination indicators without fail, transmission quality can be improved.

In the transmission method of the present invention, data traffic of audio data is predicted in the prediction step; consequently, by transmitting necessary data and its transmission format combination indicators without fail, transmission quality can be further improved.

In the transmission method of the present invention, the data traffic is predicted to be null in the prediction step when the audio data has been determined to be absent multiple consecutive times before the prediction is performed; consequently, the data traffic can be readily predicted.

In an aspect of this invention, a transmission method that transmits signals including combined plural categories of data, and transmission format combination indicators representing data traffic of the data in each category and category combination, comprises: a prediction step of predicting data traffic of the signals including combined plural categories of data; a signal generation step of, in a case where the data traffic predicted in the prediction step exceeds a predefined value, generating a candidate signal in which predefined low-priority categories of transmission data are excluded from the plural categories of the data, so that the data traffic may fall within the predefined value; a search step of searching, among a candidate set of the transmission format combination indicators, for a transmission format combination indicator matching with the candidate signal generated in the signal generation step; and a transmission step of transmitting the transmission format combination indicator searched for and determined in the search step, together with the candidate signal. Consequently, the transmission format combination indicators matching with transmission data can be determined, and by transmitting data and its transmission format combination indicators without fail, transmission quality can be improved.

In the transmission method of the present invention, a prioritizing step of prioritizing searches for the candidate set of the transmission format combination indicators based on the transmission priority of the data is further included, wherein the search step searches, according to the searching priority, for transmission format combination indicators. Consequently, the time for searching for the transmission format combination indicators can be shortened, and by transmitting necessary data and its transmission format combination indicators without fail, transmission quality can be further improved.

In the transmission method of the present invention, a selection step of selecting, among the candidate set of the transmission format combination indicators, transmission format combination indicators that do not include low-priority categories of the transmission data is further included, wherein the search step searches among the transmission format combination indicators for transmission format combination indicators that are selected in the selection step. Consequently, the time for searching for the transmission format combination indicators can be shortened, and by transmitting necessary data and its transmission format combination indicators without fail, transmission quality can be improved.

In the transmission method of the present invention, the prediction in the prediction step is performed based on data traffic of the audio data; consequently, by transmitting necessary data and its transmission format combination indicators without fail, transmission quality can be further improved.

Furthermore, in the transmission method of the present invention, the prediction step predicts the data traffic of the audio data being null when the audio data has been determined to be absent multiple consecutive times before the prediction is performed; consequently, the data traffic can be readily predicted.

### BRIEF DESCRIPTION OF DRAWINGS

Fig. 1 is a functional block diagram of a mobile communication terminal according to one embodiment of the present invention;
Fig. 2 is a layer configurational view in a mobile communication terminal according to one embodiment of the present invention;
Fig. 3 is a functional block diagram of a transmission signal control unit according to one embodiment of the present invention;
Fig. 4 is a flowchart illustrating transmission operations for each functional block in Embodiment 1 of the present invention;
Fig. 5 is a flowchart illustrating operations of audio presence/absence prediction in Fig. 4;
Fig. 6 is a flowchart illustrating operations of transmission data mapping in Fig. 4;
Fig. 7 is a flowchart illustrating details of transport format combination indicator searching operations in Fig. 4;
Fig. 8 is a table representing an example of transport format combination sets;
Fig. 9 is a flowchart illustrating transmission operations for each functional block in Embodiment 2 of the present invention;
Fig. 10 is a flowchart illustrating operations of audio data traffic prediction in Fig. 9;
Fig. 11 is a table representing an example of audio data transport formats;
Fig. 12 is a flowchart illustrating details of the transport format combination indicator searching operations in Fig. 9;
Fig. 13 is a table representing an example of transport format combination sets; and
Fig. 14 is a flowchart illustrating transmission operations for each functional block in a conventional mobile communication terminal.

### BEST MODE FOR CARRYING OUT THE INVENTION

Hereinafter, best modes carrying out the present invention will be explained with reference to the accompanying drawings in order to explain the invention in further detail.

### Embodiment 1.

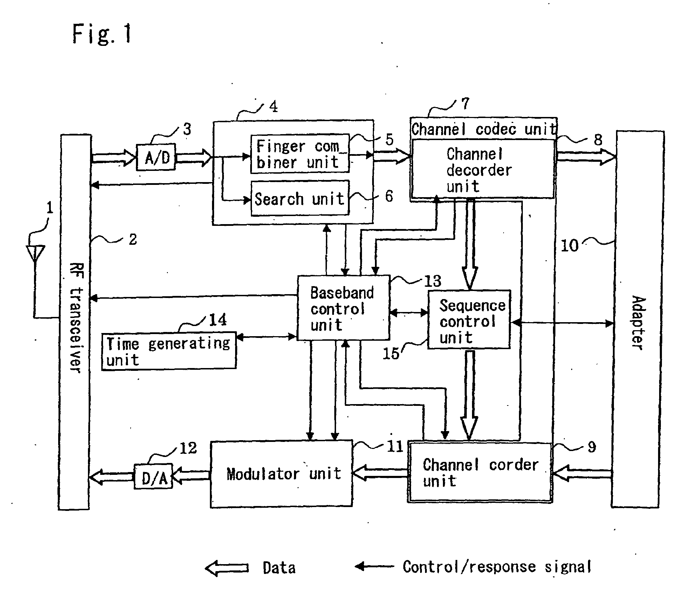

Hereinafter, Embodiment 1 of the present invention will be explained based on figures. Fig. 1 is a functional block diagram of a mobile communication terminal according to one embodiment of the invention.

In this figure, numeral 1 denotes an antenna; and numeral 2 denotes an RF transceiver having functions, in which baseband signals outputted from a modulator unit 11 are upconverted to an RF frequency and are transmitted from the antenna 1, and RF signals received from the antenna 1 are transformed to baseband signals by filtering, downconverting, etc. Numeral 3 denotes an A/D converter that transforms the baseband signals outputted from the RF transceiver into digital signals, and outputs to a demodulator unit 4; and numeral 12 denotes a D/A converter that transforms the baseband signals outputted from the modulator unit 11 into analog signals, and outputs to the RF transceiver 2.

The demodulator unit 4, which is configured including a finger combiner unit and a search unit, detects receiving instance of the required signals from the received signals, and obtains symbol data by performing despreading and rake combining (RAKE combination) using this instance. In addition, the modulator unit 11 inputs the transmission data from a channel coder unit 9, performs primary modulation (data modulation), secondary modulation (spreading modulation), and filtering that suppresses intercode interference, and then outputs the data to the RF transceiver 2.

Numeral 7 denotes a channel codec unit that includes a channel decoder unit 8 and the channel coder unit 9. The channel decoder unit 8 performs error correction and error detection corresponding to the symbol data obtained in the demodulator unit 4, and estimates the original data.

Numeral 10 denotes an adapter for connection with an audio communication unit, user interfaces such as a key operating unit, and peripheral units (such as PC), which are not illustrated in the figure. The adapter inputs signals from each of the user interfaces, etc., and outputs data as transmission data to the channel coder unit 9, as well as inputs the original data estimated in the channel decoder unit 8, and outputs data to each of the user interfaces, etc.

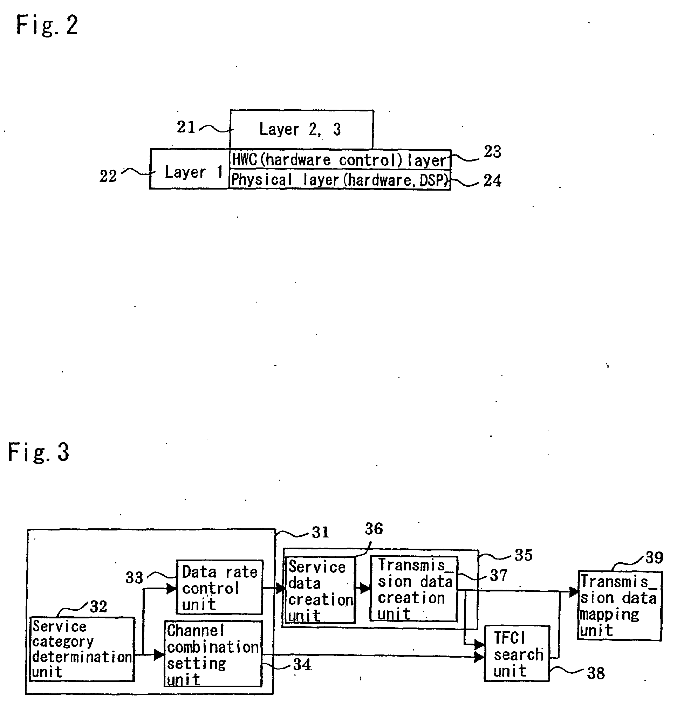

Numeral 13 denotes a baseband control unit for controlling the modulator unit 11, the demodulator unit 4, the channel codec unit 7, a time generating unit 14 that generates various times, etc. Specifically, the unit corresponds to a layer 1, numeral 22, and a hardware control layer 23 on a physical layer, as illustrated in Fig. 2 that is a layer configurational view. Here, the physical layer 24 in Fig. 2 corresponds to the modulator unit 11, the demodulator unit 4, the channel codec unit 8, etc.

The transmission control and its operation, which are the feature of the present invention, are mainly performed in a sequence control unit 15 and the channel coder unit 9. The sequence control unit 15 controls upper-level communication with the base station. Specifically, the unit determines the service category in a layer 2 and/or a layer 3, numeral 21, which is illustrated in Fig. 2, controls the data rate other than the audio data, creates the service data, sets the transport format combination set, and controls the communication sequence. The channel coder unit 9 maps the transmission data and the matched transport format combination indicators on the physical channel, as well as performs redundant encoding (channel encoding) for improving the error resistance corresponding to the transmission data.

The more detailed configuration in the sequence control unit 15 and channel coder unit 9 will be explained using Fig. 3. Fig. 3 illustrates a functional block diagram of a transmission signal control unit that is specifically included in the sequence control unit 15 and the channel coder unit 9.

In the figure, numeral 31 denotes a service-category/data-rate determination unit that comprises a service category determination unit 32, a data rate control unit 33, and a channel combination setting unit 34. The service category determination unit 32 determines the service category for transmitting and the maximum data rate, by the control information communication with the base station, and by the sequence control. The data rate control unit 33 performs the control information communication with the base station, and controls the maximum data rate of a transport channel (TrCH) in which the transmission data for each service is loaded, and also controls the data rate of the physical channel, based on the service category determined in the service category determination unit 32, and on the maximum data rate. However, the audio data rate is not controlled. The channel combination setting unit 34 determines the TFCS representing the data traffic of the available transmission data (TrCH data) for each service, based on the service category determined in the service category determination unit 32, and on the maximum data rate.

Numeral 35 denotes a data administration unit that comprises a service data creation unit 36 and a transmission data creation unit 37. The service data creation unit 36 creates the TrCH data for each service, according to the data category and data rate of the transmitting data determined in the service category determination unit 32 and in the data rate control unit 33. The transmission data creation unit 37 multiplexes the TrCH data created in the service data creation unit 36, etc., which is transmitted in each service, and creates transmission data; the unit 37 also detects the transmission data traffic (Traffic).

Numeral 38 denotes a TFCI search unit that searches among the TFCSs the TFCI matching with the data traffic that is detected in the transmission data creation unit 37. Numeral 39 denotes a transmission data mapping unit, which performs channel encoding on the transmission data, and which maps encoded data on the physical channel together with the TFCI being found and determined in the TFCI search unit 38.

In Embodiment 1, the sequence control unit 15 has the service category determination unit 32, the data rate control unit 33, the channel combination setting unit 34, and the service data creation unit 36 related to the data other than the audio data, while the channel coder unit 9 has functions in the transmission data creation unit 37, the TFCI search unit 38, and the transmission data mapping unit 39. However, they are in no way intended to be considered limiting, for example, the sequence control unit 15 may have functions of the transmission data creation unit 37 and TFCI search unit 38. Here, regarding the data whose service category is audio, an audio codec unit, which is not illustrated, has the functions of the service data creation unit 36.

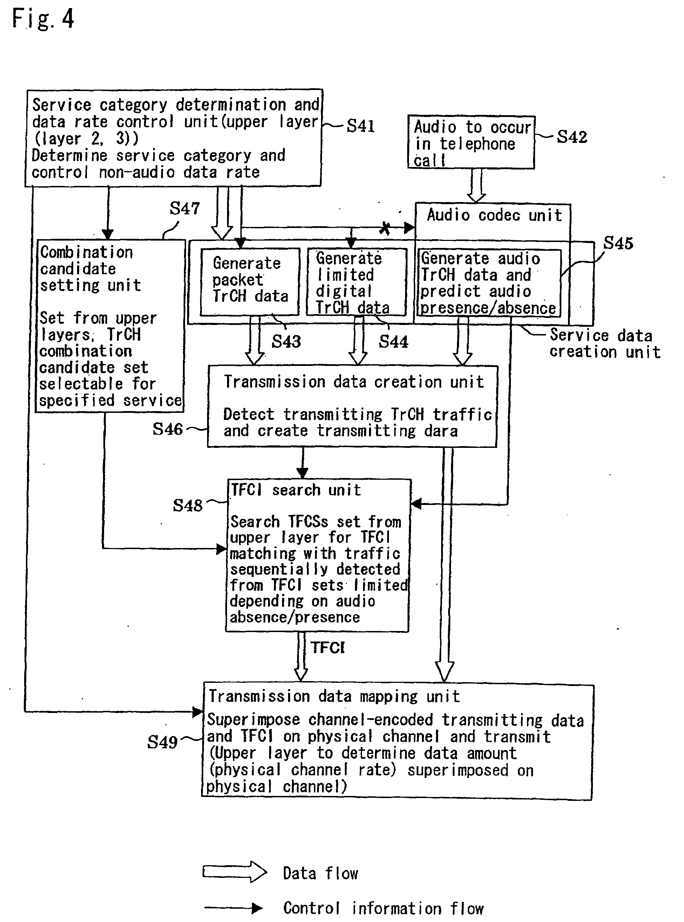

Next, the operation will be explained using Fig. 4. Fig. 4 is a flowchart illustrating transmission operations in Embodiment 1, in which each operation for each functional block, data flows between each of the functional blocks, and control information flows are represented.

In this figure, step S41 denotes operations in the service category determination unit 31 and the data rate control unit 33, in which a service category of the transmission data is determined by the control information communication with the base station and by the sequence control, and in which a maximum data rate of the transport channel, to which the determined transmission data for each service is transported, is outputted as control information. At this time, regarding the transport channel in which the service category is audio; because the generation cannot be detected, the data rate cannot be controlled.

Moreover, steps S43, S44, and S45 are operations in the service data creation unit 36. In steps S43 and S44, each packet TrCH data and limited digital TrCH data for each service are created according to the service category and data rate determined in step 41. Regarding audio, audio presence/absence prediction is performed, as well as audio TrCH data is created (step S45), based on the audio generation in the telephone (step S42). The results of the prediction are outputted as control information.

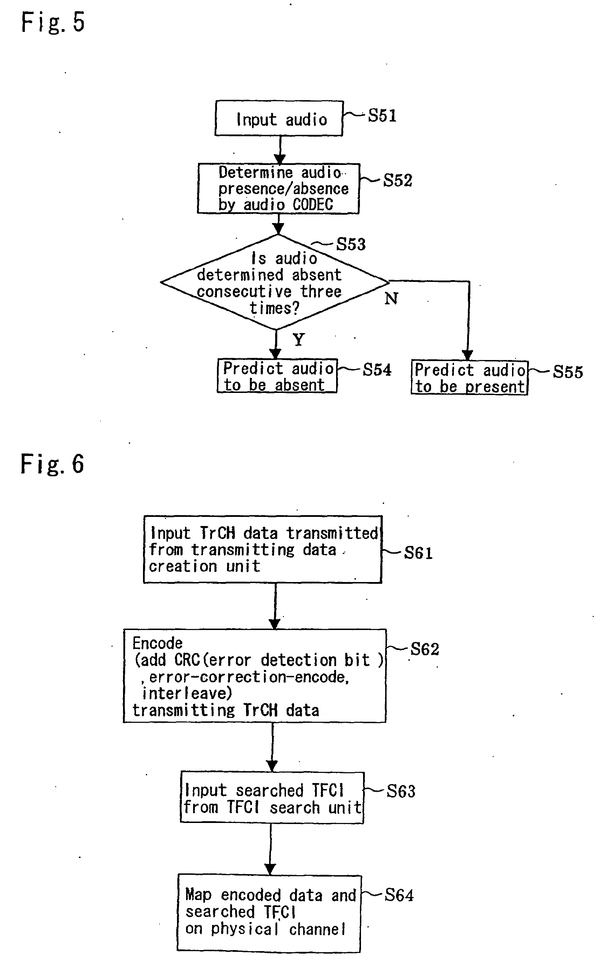

Here, an example of methods for performing the audio presence/absence prediction will be explained using Fig. 5. First, when audio is generated in a telephone call, it is inputted into the audio codec unit (step S51), and predefined audio codec (encoding) is performed. At this time, the audio presence/absence is simultaneously determined (step S52), and the audio presence/absence determination is performed as to whether audio has been determined absent three consecutive times for each unit processing, in step S53. As a result, when audio is determined to be absent three consecutive times, the audio in the next unit processing is predicted to be absent (data traffic being null) (step S54). Conversely, when audio is not determined to be absent three consecutive times, the audio in the next unit processing is predicted to be present (step S55). In this way, the data traffic of the audio can be readily predicted.

Fig. 4 recurs. In step S46, the transmission data creation unit inputs the different service TrCH data that has been created in steps S43, S44, and S45, multiplexes these TrCH data and creates transmission data; the creation unit also detects the Traffic.

On the other hand, in the channel combination setting unit 34, by receiving the control information determined in step S41 from the service category determination unit 32 and data rate control unit 33, the available TrCH size (transport format) combination set (TFCS) for each service in the specified service combination is set.

In the TFCI search unit 38, the predefined TFCIs are selected based on the audio presence/absence prediction predicted in step S45 among the TFCSs set in step S47, and the TFCIs matching with the Traffic that is detected in step S46 among the selected TFCI sets is searched for (step S48). Then, in step S49, the transmission data mapping unit channel encodes the transmission data created in step S46, and maps the data on the physical channel and transmits the data together with the TFCIs determined in step S48.

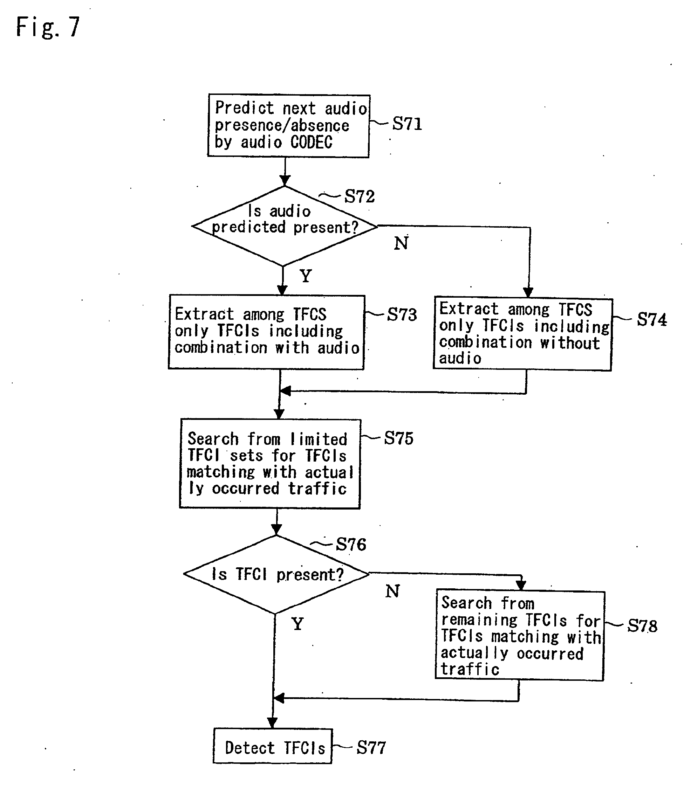

Details of the TFCI searching operations in above step S48 and in the data mapping operations in step S49 will be explained using Fig. 6 and Fig. 7.

Fig. 6 is a flowchart illustrating transmission data mapping operations in step S49. First, the transmission data mapping unit 39 inputs the transmission data created by multiplexing the TrCH data in step S46 (step S61). Next, addition of an error detection bit (CRC), error correction encoding, and interleaving are performed to this multiplexed TrCH data, and the data is then encoded (step S62). Then, in step S63, the TFCIs searched for and determined in step S48 are inputted, and those TFCIs and the transmission data encoded in step S62 are mapped on the physical channel.

Fig. 7 is a flowchart illustrating details of the TFCI search operations in step S48. First, the TFCI search unit 38 inputs the audio presence/absence prediction information predicted in step S45 (step S71), and determines the prediction results (step S72). In a case where the prediction result demonstrates audio presence, step S73 ensues; only the TFCIs that represent among the TFCSs determined in step S47 the audio presence combination are selected. While in a case where the prediction result demonstrates audio absence, step S74 ensues, only the TFCIs that represent among the TFCS determined in step S47 the 'audio absence combination are selected and picked out. Then, the respective TFCIs are outputted.

Then, the TFCIs that matches with actual Traffic detected in step S46 are searched for in the TFCI set limited in step S73 or step S74 (step S75). In step S76, in a case where matched TFCIs are found, the TFCIs are detected and determined (step S77). In a case where matched TFCIs are not found, step S78 ensues; the matched TFCIs are searched for in the remaining TFCI set that has not been selected in steps S73 or S74. Then, searched TFCIs are detected and determined (step S77).

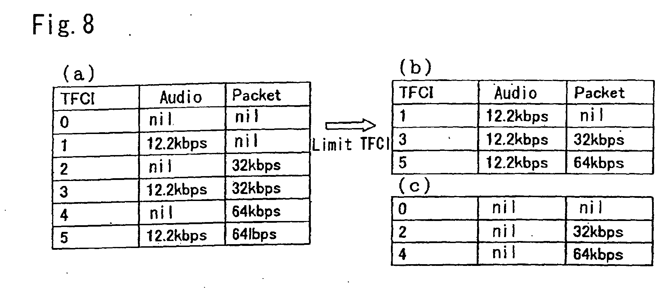

In order to specifically explain the above-described operation in steps S73 and S74, Fig. 8 is used. In Fig 8, an example of the TFCI sets that are selected and limited based on the above TFCS and the audio presence/absence prediction from this TFCS is represented. In this figure, Fig. 8(a) represents a TFCS that is set in the channel combination setting unit 34. In this example, the specified services are two kinds, audio and packet, and TFCIs (0 - 5) are allocated to the combination of the data traffic (the data rate) for each TrCH data. Moreover, Fig. 8(b) represents, in a case where audio is predicted to be present, a TFCI set in which only a combination of audio presence is outputted from the TFCS represented in Fig. 8(a), while Fig. 8(c) represents, in a case where audio is predicted to be absent, a TFCI set extracted.

As described above, because by selecting the TFCIs with the audio presence/absence prediction being performed, the TFCI sets to be searched for can be reduced, the searching time can be shortened compared with the case of the matched TFCIs being searched for among all of the set TFCSs.

The searching time that can be shortened will be described more specifically. For example, assuming that one radio frame, i.e., a processing unit, is 10 ms, approximately 4 ms among that time is used for transmission data processing. In CDMA communication system, as transmission data processing, in addition to command analysis, channel control, TFCI search, and encoding parameter calculation attributable to rate matching, predefined processing such as encoding, interleaving, and rate matching must be performed. Because it takes approximately 2 ms in processing such as encoding, interleaving, and rate matching, the command analysis, channel control, TFCI search, and encoding parameter calculation have to be performed within approximately 2 ms. The TFCS number that is set differs depending on the services. For example, a case is that the TFCS number becomes 64, when the transport channels are five. If all of the TFCSs are searched for, the searching time becomes approximately 3 ms; therefore the transmission cannot be performed because the processing is not completed. However, the TFCI set number to be searched for is made to be half by the audio presence/absence being predicted and the TFCIs being selected, so that the processing time becomes approximately 1.5 ms, which allows the TFCIs to be determined within the predefined processing unit time. Because the transmission data can be transmitted together with these TFCIs, stable transmission that is independent from the service can be performed, and improvements in transmission quality can be realized.

### Embodiment 2.

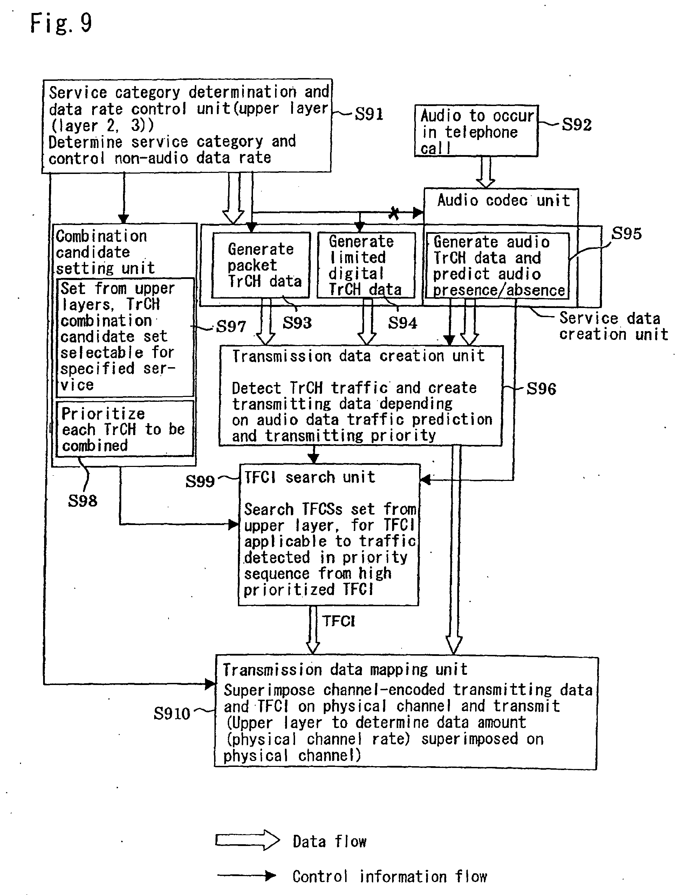

Next, Embodiment 2 of the present invention will be explained. Embodiment 2 is a mobile communication terminal having the functional blocks illustrated in Fig. 1 and Fig. 2, which performs transmission operations differing from those in Embodiment 1. Because the configuration of the functional blocks is similar to that in Embodiment 1, the explanation is omitted, and the operations are explained using Fig. 9.

Fig. 9 is a flowchart illustrating transmission operations in Embodiment 2, which is represented by operations of each functional block, by data flows among each of functional blocks, and by control information flows. In the figure, step S91 denotes operations in the service category determination unit 32 and the data rate control unit 33, that is, by the control information communication with the base station and by the sequence control, the service category of the transmitting data is determined, and the maximum data rate of the transport channel, in which the determined transmission data for each service is transported, is outputted as the control information. Here, in the transport channel in which the service category is audio data, because its generation cannot be detected, the data rate cannot be controlled.

Moreover, steps S93, S94, and S95 are operations in the service data creation unit 36, and in step S93 and step S94, according to the service category and the data rate determined in step S91, each packet TrCH data and each limited digital TrCH data are created for each service. Regarding audio, based on audio generation in a telephone call (step S92), audio TrCH data is created and the audio data traffic is predicted (step S95). The prediction result is outputted as control information.

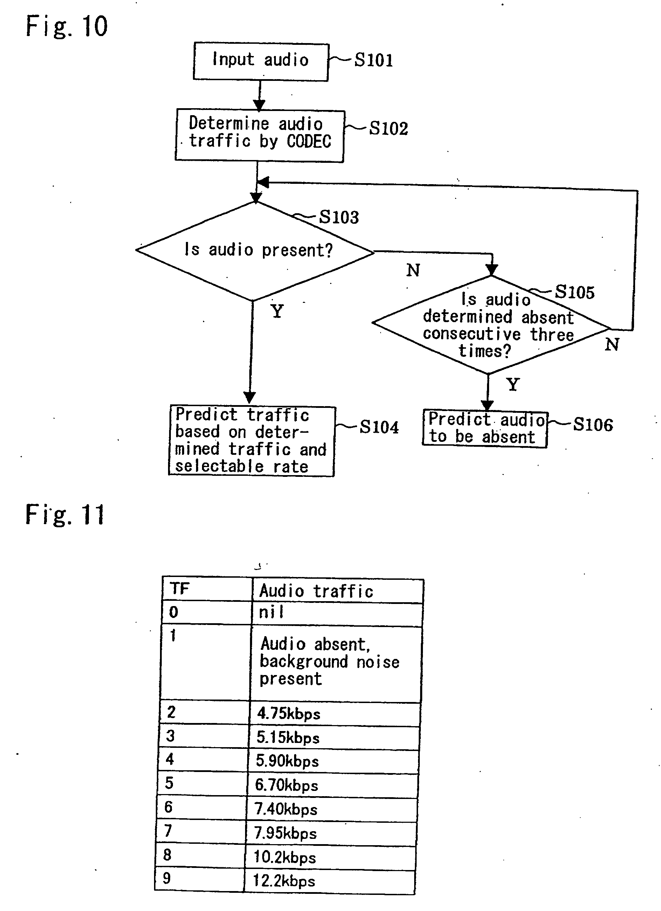

Here, an example of methods for predicting the audio data traffic will be explained using Fig. 10 and Fig. 11. First, in a case where audio in a telephone call is generated, it is inputted into the audio codec unit (step S101), and predefined audio codec (encoding) is performed. At this time, the audio data traffic is simultaneously estimated (step S102), and this estimated result determines whether audio is present or absent (data traffic being zero) (step S103). In a case where audio is determined to be absent in step 103, step S105 ensues; it is determined whether the audio for each processing unit is judged to be absent three consecutive times. Then, in a case where audio is determined to be absent three consecutive times, the audio in the next unit processing is predicted to be absent (data traffic being zero) (step S106). In a case where audio is not determined absent three consecutive times, step S103 recurs.

On the other hand, in a case in which audio is determined to be present in step S103, step S104 ensues; based on the data traffic determined in step S102, and based on the predefined available data traffic (data rate) of the audio data, the audio data traffic for next processing unit is predicted. Details of this prediction method will be explained using Fig. 11. Fig. 11 is a table representing an example of the available data traffic of the above audio data. In this figure, the available audio data traffic is defined with ten steps from "nil (audio absence)" to 12.2 kbps, and corresponding to each data traffic, numerals 0 - 9 that represent transport formats (TFs) are allocated. For example, if a TF that represents the data traffic determined in step S102 is seven, the audio data traffic in the next processing unit is predicted to be any one of TF6, TF7, and TF8. Here, characteristics in which audio data traffic does not change so abruptly in the consecutive processing units are utilized. Accordingly, the audio data' traffic can be easily predicted. Moreover, with the data traffic in a plurality of the processing units being averaged, it may be possible to select a data traffic nearest to the average data traffic in Fig. 11, and consider it as a predicted data traffic. Similar effects can be also obtained in this case.

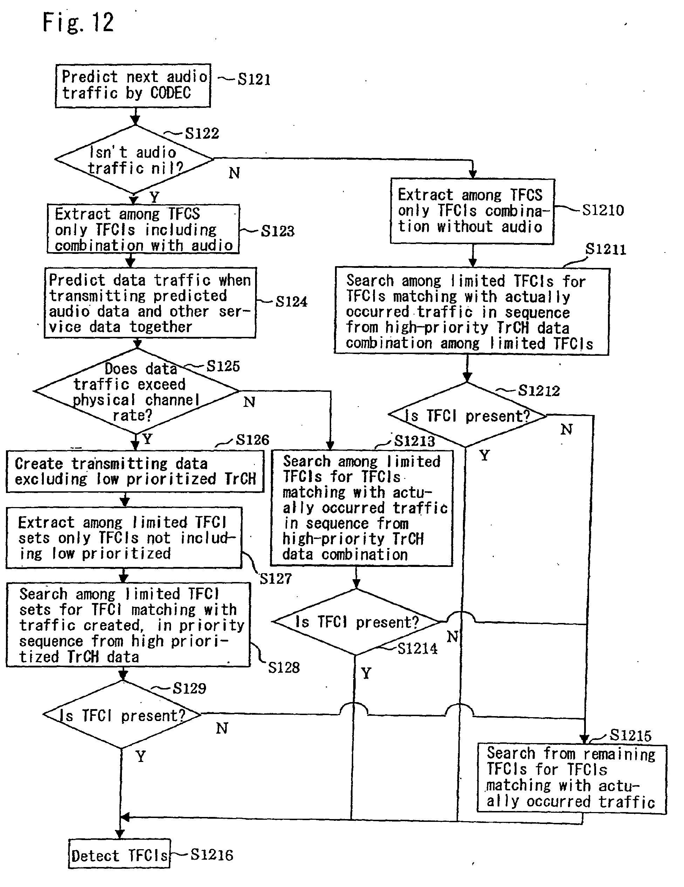

Fig.9 recurs. In step S96, the TrCH data for each service created in steps S93, S94, and S95 is inputted, and the transmission data is created with these TrCH data being multiplexed; the Traffic is also detected. However, in a case in which it is determined that data exceeds the defined data traffic, if both this audio TrCH data and the TrCH data for each service created in steps S93 and S94 are transmitted, based on the audio data traffic predicted in step S95, transmission data is created by multiplexing high-priority transmission TrCH data after predefined low-priority transmission TrCH data having been removed. Details in this step S96 will be explained later using Fig. 12.

On the other hand, the channel combination setting unit 34 receives the control information that is determined in step S91 from the service category determination unit 32 and the data rate control unit 33, and sets an available TrCH size (transport format) combination set (TFCS) for each service in the specified service combination (step S97). Moreover, in step S98, predefined priority is given to each TrCH data to be combined.

In the TFCI search unit 38, predefined TFCIs, based on the audio data traffic prediction in step S95, are selected among the TFCSs set in step S97, and TFCIs that are applicable to the traffic detected in step S96 are searched for depending on the priority given in step S98 among the selected TFCI sets (step S99). Then, in step 910, the transmission data mapping unit performs channel encoding of the transmission data created in step S96, maps the data on the physical channel together with the TFCI determined in step S99, and transmits it.

Here, details of the transmission data creation operations in step S96 and the TFCI search operations in step S99 will be explained using Fig. 12. Meanwhile, explanation in detail of the data mapping operation in step S910 will be omitted because of similarity of the operation in Fig. 6 of Embodiment 1.

Fig. 12 is a flowchart illustrating the transmission data creation operations in step S96 and the TFCI search operations in step S99. First, in the transmission data creation unit 37, information of the audio data traffic prediction in step S95 is inputted (step S121), and a predicted result is determined (step S122). In the predicted result, in a case in which the audio data traffic is predicted to be zero, step S1210 ensues; in a case in which audio data traffic is predicted other than zero, step S123 ensues. Then, in step S123, the TFCI search unit 38 selects only TFCIs that represent combination including the predicted audio data traffic from the TFCSs determined in step S97.

Next, in step S124, the data traffic when the predicted audio data traffic and the TrCH data other than the audio determined in the service-category/data-rate determination unit 31 are transmitted together is predicted, and it is judged whether the predicted data traffic exceeds the data traffic (rate) in the defined physical channel (step 125). In a case in which it is predicted to exceed, step S126 ensues; while predicted not to exceed, step S1213 ensues.

In step 126, the transmission data creation unit 37 creates transmission data by multiplexing the data with audio TrCH data, in which predetermined low-priority transmission TrCH data is excluded from among TrCH data that is other than audio and that has been determined in the service category and data rate determination unit 31 (upper layer) is excluded, so that the data traffic falls within the predefined value. In addition, in the TFCI search unit 38, only the TFCIs that exclude, based on the defined transmission priority, combination of the low-priority TrCH data are extracted from the TFCI sets specified in step S123 (step S127).

Then, TFCIs suited to the Traffic of the transmission data that is created in step S 126 are searched for in sequence from the combinations that include high-priority TrCH data, based on the defined transmission priority given in step S98, among the TFCI sets specified in step S127 (step S128). In step S129, in a case in which suited TFCI is found, the TFCI is detected and determined (step S1216). In a case in which suited TFCI is not found, step S1215 ensues; and suited TFCI is searched for among the remaining TFCI sets that have not been selected. Thus, searched TFCI is detected and determined (step S1216).

On the other hand, in a case in which it is predicted that the audio data traffic is zero in step S122 and step S1210 ensues, the TFCI search unit 38 selects only TFCIs that represent the combinations including nil audio data traffic among the TFCS determined in step S97. Then, TFCIs suited to the Traffic of actually generated transmission data are searched for in sequence from the combinations that include high priority TrCH data, based on the defined transmission priority given in step S98, among the TFCI sets (step S1211). In step S1211, in a case in which suited TFCIs are found, the TFCIs are detected and determined (step 1216). In a case in which suited TFCIs are not found, step S1215 ensues; and suited TFCIs are searched for among the remaining TFCI sets that are unselected. Thus, searched TFCIs are detected and determined (step S1216).

Moreover, in a case in which the data traffic is determined not to exceed the defined data traffic in the physical channel and step S1213 ensues, the TFCI search unit 38 searches for, among the TFCI sets specified in step S123, TFCIs that are suited to the Traffic of the actually generated transmission data in sequence from the combinations that include high priority TrCH data, based on the defined transmission priority given in step S98 (step S1213).

In step S1214, in a case in which suited TFCIs are found, the TFCIs are detected and determined (step S1216). In a case in which suited TFCIs are not found, step S1215 ensues; and suited TFCIs are searched for among the remaining TFCI sets that are unselected. Thus, the searched TFCIs are detected and determined (step S1216).

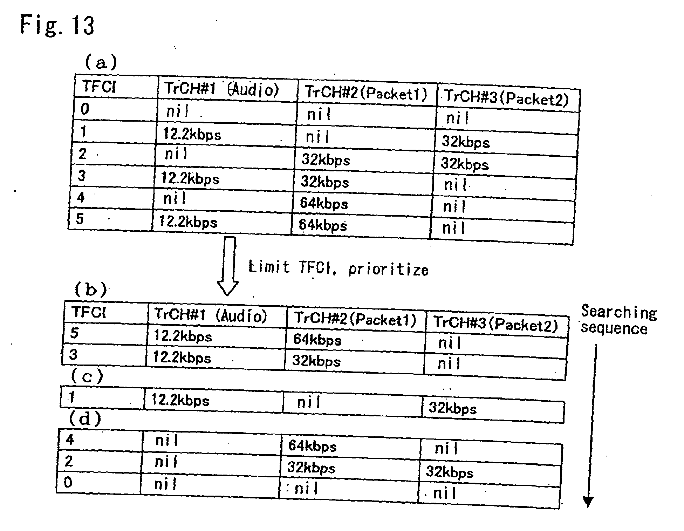

In order to explain the operations in step S123 and S127 more specifically, Fig. 13 will be used. Fig. 13 represents an example of TFCSs, audio data traffic predicted from these TFCSs, and TFCI sets selected and specified based on the transmission priority. In the figures, Fig. 13(a) represents a TFCS set in the channel combination set unit 34. In this example, defined services are three kinds, packets 1 and 2, and TFCIs (0 - 5) are allocated to data traffic (data rate) combinations for each TrCH data. Moreover, figures 13(b) and 13(c) represent TFCI sets in which only combinations of the audio data rate with 12.2 kbps are picked out from the TFCS represented in Fig. 13(a), when the audio data rate is predicted to be 12.2 kbps in step S122, while Fig. 13(d) represents a TFCI set picked out, when the audio data traffic is predicted to be zero.

Moreover, Fig. 13(b) represents a TFCI set in which only TFCIs excluding low-priority transmission TrCH data (packet 2, in this case) are picked out among the limited TFCI sets represented in figures 13(b) and 13(c), when the data traffic is predicted to exceed over the data traffic (rate) of the defined physical channel in step S125. In Fig. 13(b), the searching may be performed in sequence from a TFCI, to which high priority is given in step S98.

Here, the sequence for limiting the TFCI is not limited to above explanation. For example, TFCIs that include predicted audio data traffic may be extracted from the specified TFCI sets in which only TFCIs that do not include low-priority TrCH data are extracted.

As described above, because TFCI sets to be searched for can be lessened by the audio data traffic being predicted and the TFCIs being selected, the search time can be shortened. Although the search time that can be shortened varies depending on services, if this is compared with searching for suited TFCIs among all of set TFCSs, 1/2 or less than 1/2 the search time may be obtained as with Embodiment 1, and TFCIs can be determined within the predefined processing unit time. Because transmission data can be transmitted together with these TFCIs, stable transmission that is independent from the category of services can be carried out, and improvements in transmission quality can be realized.

Moreover, in a case in which the data traffic, when audio, and TrCH data other than audio are transmitted together, is predicted to exceed over the data traffic in the defined physical channel based on the predicted audio data traffic, because transmission data is created by multiplexing, with low-priority transmission TrCH data being excluded, so that the data traffic falls within the defined value, problems can be prevented, in which the TFCIs can not be searched and transmission becomes impossible causing transmission quality being deteriorated.

Furthermore, in a case in which transmission data that is multiplexed, with the low-priority transmission TrCH data being excluded, is created, because TFCI combinations that do not include the low-priority TrCH data are selected based on the defined transmission priority, and because suited TFCIs are searched in sequence from the combinations including high-priority TrCH data, the search time can be further shortened. Consequently, because TFCIs can be determined without fail within the defined processing unit time, and transmission data can be transmitted together with these TFCIs, transmission quality can be further improved.

## Claims

1. A transmission method for a communication device that transmits signals including combined plural categories of data, and transmission format combination indicators representing data traffic of the data in each category and category combination, the transmission method comprising:
a prediction step of predicting data traffic of predetermined categories of data;
a selection step of, among a candidate set of the transmission format combination indicators, selecting transmission format combination indicators, based on the predicted data traffic in the prediction step;
a detection step of detecting data traffic of the signals including the combined plural categories of the data;
a search step of searching, among the transmission format combination indicators selected in the selection step, for a transmission format combination indicator matching with the data traffic detected in the detection step; and
a transmission step of transmitting the transmission format combination indicator searched for and determined in the search step, together with the signals.

2. A transmission method for a communication device as recited in claim 1, wherein the prediction step predicts data traffic of audio data.

3. A transmission method for a communication device as recited in claim 2, wherein the prediction step predicts the data traffic being null when the audio data has been determined to be absent multiple consecutive times before the prediction is performed.

4. A transmission method for a communication device that transmits signals including combined plural categories of data, and transmission format combination indicators representing data traffic of the data in each category and category combination, the transmission method comprising:
a prediction step of predicting data traffic of the signals including combined plural categories of data;
a signal generation step of, in a case where the data traffic predicted in the prediction step exceeds a predefined value, generating a candidate signal in which predefined low-priority categories of transmission data are excluded from the plural categories of the data, so that the data traffic may fall within the predefined value;
a search step of searching, among a candidate set of the transmission format combination indicators, for a transmission format combination indicator matching with the candidate signal generated in the signal generation step; and
a transmission step of transmitting the transmission format combination indicator searched for and determined in the search step, together with the candidate signal.

5. A transmission method for a communication device as recited in claim 4, the transmission method further comprising:
a prioritizing step of prioritizing searches for the candidate set of the transmission format combination indicators based on the transmission priority of the data, wherein
the search step searches for transmission format combination indicators according to the searching priority.

6. A transmission method for a communication device as recited in claim 4, the transmission method further comprising:
a selection step of selecting, among the candidate set of the transmission format combination indicators, transmission format combination indicators that do not include low-priority categories of the transmission data; wherein
the search step searches for transmission format combination indicators among the transmission format combination indicators selected in the selection step.

7. A transmission method for a communication device as recited in claim 4, wherein:
the plural categories of the data include audio data and other data in which data traffic has been predetermined, and
in the prediction step, the prediction is performed based on data traffic of the audio data.

8. A transmission method for a communication device as recited in claim 7, wherein the prediction step predicts the data traffic of the audio data being null when the audio data has been determined to be absent multiple consecutive times before the prediction is performed.
